# EUROPEAN PATENT SPECIFICATION

(11) **EP 4 195 775 B1**
(45) Date of publication and mention of the grant of the patent: **29.07.2026**
(21) Application number: 21863508.4
(22) Date of filing: 18.08.2021
(51) Int. Cl.: H04W 40/02, H04W 72/56, H04L 41/00, H04W 28/02, H04W 40/22

(54) **APPLICATION DATA TRANSMISSION METHOD, SYSTEM, AND ELECTRONIC DEVICE**
ANWENDUNGSDATENÜBERTRAGUNGSVERFAHREN, SYSTEM UND ELEKTRONISCHE VORRICHTUNG
PROCÉDÉ DE TRANSMISSION DE DONNÉES D'APPLICATION, SYSTÈME ET DISPOSITIF ÉLECTRONIQUE

(30) Priority: 03.09.2020 CN 202010917490
(43) Date of publication of application: 14.06.2023
(73) Proprietor: Nokia Technologies Oy, 02610 Espoo (FI)
(72) Inventor: ZHAO, Zhihua, Shenzhen, Guangdong 518129 (CN); WANG, Ding, Shenzhen, Guangdong 518129 (CN); ZENG, Wei, Shenzhen, Guangdong 518129 (CN); XU, Baojun, Shenzhen, Guangdong 518129 (CN); HAN, Yaohui, Shenzhen, Guangdong 518129 (CN); HUI, Shaobo, Shenzhen, Guangdong 518129 (CN)
(74) Representative: Cohausz & Florack
(86) International application number: PCT/CN2021/113154
(87) International publication number: WO 2022/048441

(56) References cited:
- WO-A1-2018/175974
- CN-A- 111 131 258
- CN-A- 111 226 472
- US-A1- 2020 259 786
- US-B1- 10 602 422
- US-B1- 10 708 836
- MOTOROLA MOBILITY, LENOVO: "Application Function influence on slice selection", 3GPP DRAFT; S2-175862_4262_502_AF INFLUENCE_V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Sophia Antipolis, France; 20170821 - 20170825, 21 August 2017 (2017-08-21), Mobile Competence Centre ; 650, route des Lucioles ; F-06921 Sophia-Antipolis Cedex ; France , XP051325708

## Description

This application claims priority to Chinese Patent Application No. 202010917490.7, filed with the China National Intellectual Property Administration on September 3, 2020 and entitled "METHOD AND SYSTEM FOR TRANSMITTING APPLICATION DATA, AND ELECTRONIC DEVICE.

### TECHNICAL FIELD

This disclosure relates to the communication field, and the invention in particular, relates to a method and system for transmitting application data, and a second electronic device.

### BACKGROUND

As a terminal is used in increasingly extensive scenarios, there are more and more applications in the terminal to meet the requirements of users in different use scenarios. Currently, in a 5th generation (5th Generation, 5G) communication system, an operator may specify a slice corresponding to data of each application to distinguish transmission priorities of services.

However, in an application scenario in which a customer-premises equipment (Customer Premise Equipment, CPE) exists, a current CPE only has a forwarding function and does not have an application to which the CPE belongs. Therefore, in a data forwarding procedure, the CPE can identify only an IP 3-tuple in a route policy to serve as a route matching standard of data, to determine a corresponding slice.

WO 2018/175974 A1 relates to a method and system for pervasive connectivity in the context of group based service (GBS) provisioning, particularly in 5G systems. An apparatus designed for GBS provisioning in a mobile network. The apparatus includes a memory interface and a processor. The memory interface sends or receives data (specifically, an application identifier (ID) value and a temporary group-based service ID (TGSID) value) to or from a memory device. The processor handles a service request originating from an access and mobility management function (AMF). This service request includes both the application ID value and the TGSID value, both associated with a groupcast service. In response to the service request, the processor activates the groupcast service at one or more associated access stratum network entities, allowing for the forwarding of groupcast internet protocol (IP) packets.

Another example of the prior art can be found in US10708836 B1.

The invention is defined by the appended claims.

### BRIEF DESCRIPTION OF DRAWINGS

To describe technical solutions in embodiments of this application more clearly, the following briefly introduces the accompanying drawings for describing embodiments of this application.
FIG. 1 is a schematic diagram of an example of a communication system;
FIG. 2 is a schematic diagram of a structure of an example of a terminal;
FIG. 3 is a schematic diagram of a structure of an example of a CPE;
FIG. 4 is a schematic diagram of an example of a URSP format;
FIG. 5 is a schematic flowchart of an example of a CPE accessing a core network;
FIG. 6 is a schematic flowchart of an example of UE accessing a CPE;
FIG. 7 is a schematic diagram of an example of an interaction between UE, a CPE, and a core network;
FIG. 8 is a schematic diagram of an example of a user interface;
FIG. 9 is a schematic diagram of an example of a packet format;
FIG. 10 is a schematic flowchart of a method for transmitting application data according to an embodiment of this application;
FIG. 11 is a schematic diagram of a format of a packet according to an embodiment of this application;
FIG. 12 is a schematic flowchart of a method for transmitting application data according to an embodiment of this application;
FIG. 13 is a schematic diagram of a structure of a first electronic device according to an embodiment of this application;
FIG. 14 is a schematic diagram of a structure of a second electronic device according to an embodiment of this application; and
FIG. 15 is a schematic diagram of a structure of an apparatus according to an embodiment of this application.

### DESCRIPTION OF EMBODIMENTS

The following clearly and completely describes the technical solutions in embodiments of this application with reference to the accompanying drawings in embodiments of this application.

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and so on are intended to distinguish between different objects but do not indicate a particular order of the objects. For example, a first target object, a second target object, and the like are used to distinguish between different target objects, but are not used to describe a particular order of the target objects.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

In the description of the embodiment of this application, unless otherwise stated, "multiple" means two or more than two. For example, a plurality of processing units refer to two or more processing units, and a plurality of systems refer to two or more systems.

In descriptions of embodiments of this application, an application in a terminal may also be referred to as an application program, application software, or the like. This is not limited in this application.

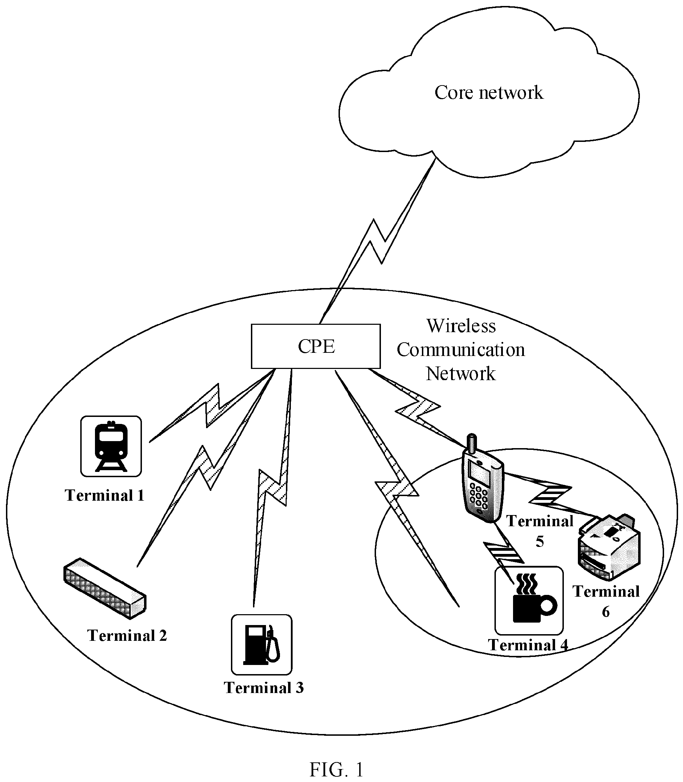

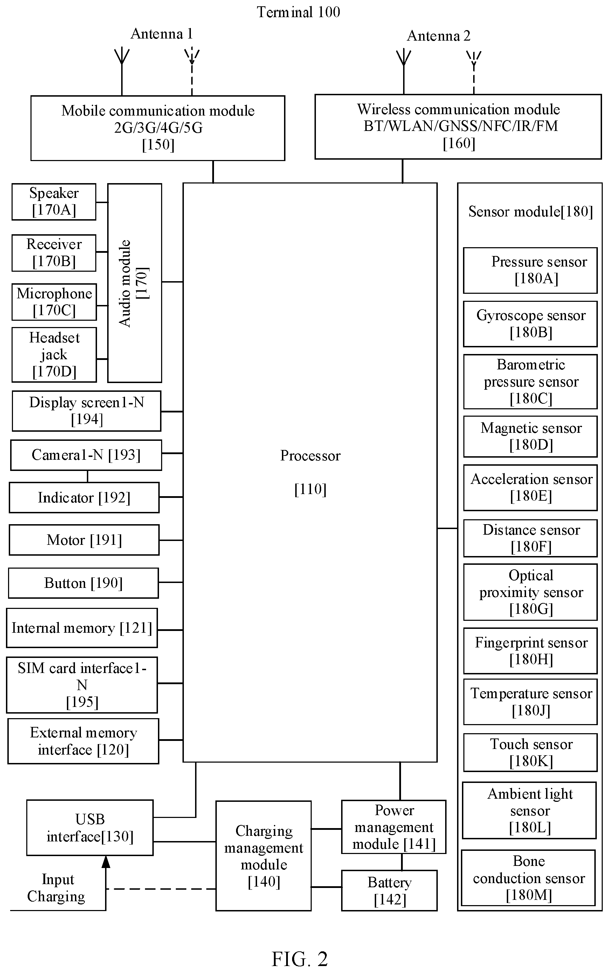

Before the technical solutions in embodiments of this application are described, a communication system in embodiments of this application is first described with reference to the accompanying drawings. FIG. 1 is a schematic diagram of a communication system according to an embodiment of this application. The communication system includes a terminal (a terminal 1, a terminal 2, a terminal 3, a terminal 4, a terminal 5, and a terminal 6), a CPE, and a core network. It should be noted that, in actual application, there may be one or more terminals and CPEs. The quantities of terminals and CPEs in the communication system shown in FIG. 2 are merely an adaptive example. This is not limited in this application.

It should be further noted that the core network may be a device cluster including one or more core network devices. Optionally, the core network device may have an access and mobility management function (access and mobility management function, AMF), and is mainly responsible for functions such as access control, mobility management (mobility management, MM), attach and detach, and gateway selection. The core network device in embodiments of this application is not limited to the AMF.

The terminal device may be a wireless communication chip, a wireless sensor, a wireless communication terminal, or the like, and may also be referred to as user equipment (user equipment, UE), a station (station, STA), or a terminal. For example, the terminal may be a mobile phone that supports a wireless fidelity (wireless fidelity, Wi-Fi) communication function, a tablet computer that supports a Wi-Fi communication function, a set-top box that supports a Wi-Fi communication function, a smart television set that supports a Wi-Fi communication function, a smart wearable device that supports a Wi-Fi communication function, an in-vehicle communication device that supports a Wi-Fi communication function, a computer that supports a Wi-Fi communication function, or the like. Optionally, the terminal may support the 802.11be standard. The Terminal may also support multiple WLAN standards belongs to 802.11, such as 802.11be, 802.11ax, 802.11ac, 802.11n, 802.11g, 802.11b and 802.11a.

For example, the CPE and the terminal may be a device applied to the Internet of Vehicles, a node or a sensor in the Internet of Things (IoT, internet of things), a smart camera, a smart remote controller, or a smart water meter and a smart meter in a smart home, a sensor in a smart city, or the like.

It should be noted that the CPE and the terminal in this application may alternatively be a wireless communication device that supports parallel transmission of a plurality of links, for example, the CPE and the terminal may be referred to as a multi-link device (multi-link device) or a multi-band device (multi-band device). Compared with a device that supports only single-link transmission, the multi-link device has higher transmission efficiency and a higher throughput.

Although this application is described by using an example in which an IEEE 802.11 network is deployed between the CPE and the terminal, a person skilled in the art can easily understand that aspects in this application may be extended to deploy other networks using various standards or protocols, for example, a BLUETOOTH (Bluetooth), a high-performance radio LAN (high performance radio LAN, HIPERLAN) (a wireless standard similar to the IEEE 802.1 1 standard, mainly used in Europe), a wide area network (WAN), a wireless local area network (wireless local area network, WLAN), a personal area network (personal area network, PAN), or another network that is known or will be developed in the future. Therefore, the various aspects provided in this application are applicable to any suitable wireless network regardless of coverage and wireless access protocols.

In a possible implementation, a wired network may be further deployed between the CPE and the terminal, and the terminal device may be a wired communication chip, a wired sensor, a wired communication terminal, or the like, that is, a device connected to the CPE by using a network cable. In this application, only an example in which a wireless network is deployed between the CPE and the terminal is used for description. For a scenario in which a wired network is deployed between the CPE and the terminal, also refer to the technical solutions in the embodiments of this application. Details are not described again in this application.

For example, FIG. 2 is a schematic diagram of a structure of a terminal 100 which is a mobile phone. Refer to FIG. 2. The terminal 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180F, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the terminal 100. In some other embodiments of this application, the terminal 100 may include more or fewer components than those shown in the figure, or some components may be combined, or some components may be split, or there may be a different component layout. The components shown in the figure may be implemented by hardware, software, or a combination of software and hardware.

The processor 110 may include one or more processing units. For example, the processor 110 may include an application processor (application processor, AP), a modem (Modem), a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

It may be understood that an interface connection relationship between the modules in this embodiment of this application is merely an example for description, and does not constitute a limitation on the structure of the terminal 100. In some other embodiments of this application, the terminal 100 may alternatively use an interface connection manner different from that in the foregoing embodiment, or a combination of a plurality of interface connection manners.

A wireless communication function of the terminal 100 may be implemented through the antenna 1, the antenna 2, the mobile communication module 150, the wireless communication module 160, the modem processor, the baseband processor, and the like.

The terminal 100 may implement a display function by using the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, which execute program instructions to generate or change display information.

The terminal 100 may implement an image shooting function by using the ISP, the camera 193, the video codec, the GPU, the display 194, the application processor, and the like.

The internal memory 121 may be configured to store computer-executable program code. The executable program code includes instructions. The processor 110 runs the instructions stored in the internal memory 121, to implement various function applications and data processing of the terminal 100. The internal memory 121 may include a program storage area and a data storage area. The program storage area may store an operating system, an application required by one or more functions (for example, a sound play function and an image play function), and the like. The data storage area may store data (for example, audio data and a phone book) and the like created when the terminal 100 is used. In addition, the internal memory 121 may include a high-speed random access memory, and may further include a nonvolatile memory, for example, one or more magnetic disk storage devices, a flash storage device, a universal flash storage (universal flash storage, UFS), or the like.

The SIM card interface 195 is configured to connect to a SIM card. The SIM card may be inserted into the SIM card interface 195 or detached from the SIM card interface 195, to implement contact with or separation from the terminal 100. The terminal 100 may support one or N SIM card interfaces, where N is a positive integer greater than 1. The SIM card interface 195 may support a Nano SIM card, a Micro SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external storage card. The terminal 100 interacts with a network through the SIM card, to implement functions such as calling and data communication. In some embodiments, the terminal 100 uses an eSIM, namely, an embedded SIM card. The eSIM card may be embedded in the terminal 100, and cannot be separated from the terminal 100.

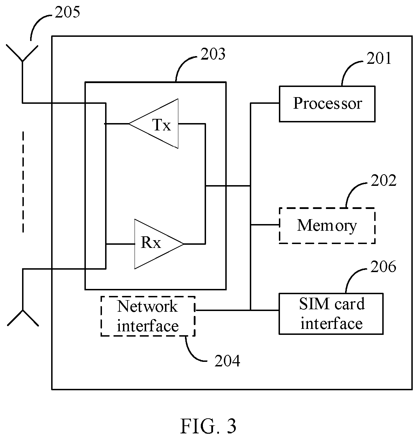

For example, FIG. 3 is a schematic diagram of a structure of an example of a CPE 200. Refer to FIG. 3. The CPE 200 includes at least one processor 201, at least one transceiver 203, one or more antennas 205, and at least one SIM card interface 206. Optionally, the CPE 200 may further include at least one memory 202 and at least one network interface 204. The processor 201, the memory 202, the transceiver 203, and the network interface 204 are connected, for example, through a bus. The antenna 205 is connected to the transceiver 203. The network interface 204 is configured to enable the CPE to be connected to another communication device by using a communication link. For example, the CPE may be connected to a terminal device by using the network interface 204. In this embodiment of this application, the connection may include various types of interfaces, transmission lines, buses, or the like. This is not limited in this embodiment. The SIM card interface 206 is configured to enable the CPE to communicate with a core network through a mobile network. For specific descriptions, refer to descriptions on a terminal side, and details are not described herein again.

In this embodiment of this application, the processor, such as the processor 201, may include at least one of the following types: a central processing unit (Central Processing Unit, CPU), a digital signal processor (Digital Signal Processor, DSP), a microprocessor, an application-specific integrated circuit (Application-Specific Integrated Circuit, ASIC), a microcontroller unit (Microcontroller Unit, MCU), a field programmable gate array (Field Programmable Gate Array, FPGA), or an integrated circuit configured to implement a logical operation. For example, the processor 201 may be a single-CPU (single-CPU) processor or a multi-CPU (multi-CPU) processor. The at least one processor 201 may be integrated into one chip or located on a plurality of different chips.

The memory, for example, the memory 202 in embodiments of this application may include at least one of the following types: a read-only memory (read-only memory, ROM), another type of static storage device that can store static information and instructions, a random access memory (random access memory, RAM), another type of dynamic storage device that can store information and instructions, or an electrically erasable programmable read-only memory (Electrically erasable programmable-only memory, EEPROM). In some scenarios, the memory may alternatively be a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed to a computer. However, the memory is not limited thereto.

The memory 202 may exist independently, or may be connected to the processor 201. Optionally, the memory 202 may alternatively be integrated with the processor 201, for example, integrated into a chip. The memory 202 can store program code for performing the technical solutions in the embodiments of this application, and the processor 201 controls execution of the program code. Various types of executed computer program code may also be considered as drivers of the processor 201. For example, the processor 201 is configured to execute the computer program code stored in the memory 202, to implement the technical solutions in the embodiments of this application. Optionally, the memory 202 may be located outside a chip, and is connected to the processor 201 through an interface.

The transceiver 203 may be configured to support receiving or sending of a radio frequency signal between the CPE and the terminal and between the CPE and the core network device. The transceiver 203 may be connected to the antenna 205. The transceiver 203 includes a transmitter Tx and a receiver Rx. Specifically, the one or more antennas 205 may receive a radio frequency signal. The receiver Rx of the transceiver 203 is configured to receive the radio frequency signal from the antenna, convert the radio frequency signal into a digital baseband signal or a digital intermediate frequency signal, and provide the digital baseband signal or the digital intermediate frequency signal for the processor 201, so that the processor 201 further processes the digital baseband signal or the digital intermediate frequency signal, for example, performs demodulation processing and decoding processing. In addition, the transmitter Tx of the transceiver 203 is further configured to receive a modulated digital baseband signal or digital intermediate frequency signal from the processor 201, convert the modulated digital baseband signal or digital intermediate frequency signal into a radio frequency signal, and send the radio frequency signal through the one or more antennas 205. Specifically, the receiver Rx may selectively perform one or more levels of frequency down-mixing processing and analog-to-digital conversion processing on the radio frequency signal to obtain the digital baseband signal or the digital intermediate frequency signal. A sequence of the frequency down-mixing processing and the analog-to-digital conversion processing is adjustable. The transmitter Tx may selectively perform one or more levels of frequency up-mixing processing and digital-to-analog conversion processing on the modulated digital baseband signal or the modulated digital intermediate frequency signal to obtain the radio frequency signal. A sequence of the frequency up-mixing processing and the digital-to-analog conversion processing is adjustable. The digital baseband signal and the digital intermediate frequency signal may be collectively referred to as a digital signal.

The communication system may be configured to support a fifth generation (fifth generation, 5G) access technology and a future-oriented communication technology, for example, a new radio (new radio, NR) access technology. For example, in descriptions of this embodiment of this application, a standalone (Standalone, SA) network in 5G is used as an example. Actually, the technical solutions of this application may be further applied to another scenario such as an NSA network. This is not limited in this application.

A concept of a network slice is introduced into the 5G communication system. A network slice technology can divide a physical network into a plurality of virtual networks. One virtual network is considered as one "network slice", and network slices are independent of each other. Different protocol data unit (protocol data unit, PDU) sessions in one terminal may need a network slice corresponding to each PDU session to provide a service.

To make a person skilled in the art better understand this application, a concept of the network slice and its related backgrounds that may be used in this application are briefly described in the following.

As a key technology in 5G, the network slice has been widely concerned and researched in 3GPP and other international standards organizations, and can satisfy customization requirements of operators on various industries, vertical markets, and virtual operation services. The network slice is a logical network that provides specific network capabilities and network characteristics (Network slice: A logical network that provides specific network capabilities and network characteristics). The network slice may be a logical network having different network capabilities and network characteristics, and the logical network is on a physical or virtual network infrastructure and is customized based on different service requirements, tenants, or the like. The network slice includes a group of network capabilities and resources (for example, a computing resource, a storage resource, and a network resource) required for the network capabilities.

A network slice supported by each cell is configured by an operation, administration and maintenance (operation, administration and maintenance, OAM) system. Single network slice selection assistance information (single network slice selection assistance information, S-NSSAI) is used to identify one network slice.

The S-NSSAI includes at least one of the following: slice type/service type (slice/service type, SST) information. Optionally, the S-NSSAI may further include slice differentiator (slice differentiator, SD) information. The SST information is used to indicate behavior of the network slice, for example, a characteristic and a service type of the network slice. The SD information is supplementary information of the SST. For example, if the SST points to a plurality of network slices, the SD may assist in corresponding to one unique network slice.

There are a plurality of types of services in the terminal, for example, an enhanced mobile broadband (enhanced mobile broadband, eMBB) service, ultra-reliable low-latency communication (ultra-reliable low-latency communication, URLLC), and massive machine type communication (massive machine type communication, mMTC). PDU sessions of different types of services may correspond to different network slices. Different applications in the terminal may correspond to different service types. In other words, applications in the terminal may correspond to different network slices. It should be noted that, because provided operators or service providers are different, even PDU sessions of a same service type may also correspond to different network slices. In other words, the network slice may provide a network resource for at least one PDU session of the terminal.

In an existing standard, the core network sends a UE route selection policy (UE route selection policy, URSP) to the terminal, so that the terminal determines a routing manner of data (which may be understood as data of applications of different service types). The URSP may be used to indicate a service feature and a slice network activation parameter that need to be transmitted on the slice network. The routing manner includes: routing data to a specific slice, or transmitting data through a non-slice network.

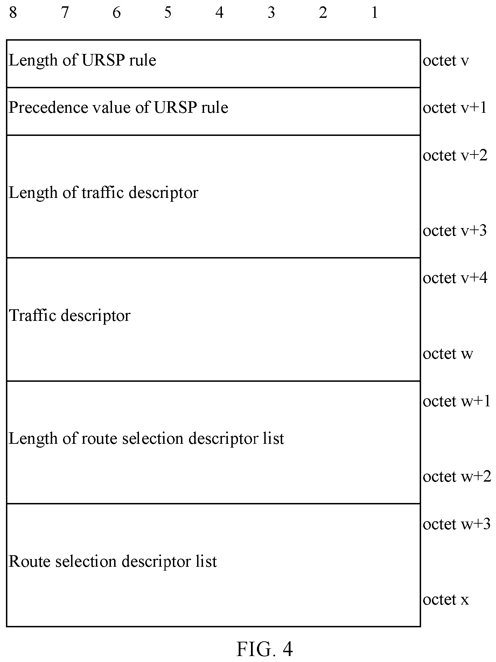

For example, FIG. 4 is a schematic diagram of an example of a format of a URSP. The URSP includes but is not limited to a length of URSP rule (length of URSP rule) field, a precedence value of URSP rule (precedence value of URSP rule) field, a length of traffic descriptor (length of traffic descriptor) field, a traffic descriptor field, a length of route selection descriptor list (length of route selection descriptor list) field, and a route selection descriptor field.

The route selection descriptor list field is used to carry a slice network activation parameter, and the slice network activation parameter includes but is not limited to parameters such as S-NSSAI corresponding to one or more slices.

The Traffic descriptor field is used to carry the foregoing information (or parameter) corresponding to the service feature that needs to be transmitted on the slice. For definitions of other fields, refer to descriptions in the 3GPP standard. Details are not described herein again.

Descriptions of the Traffic descriptor field in the protocol 3GPP 24526 are as follows:
Traffic descriptor component type identifier (Traffic descriptor component type identifier)
Bits (Bits)
87654321
0 0 0 0 0 0 0 1 Match-all type (Match-all type)
0 0 0 0 1 0 0 0 OS ID + App ID type (Operating system Identification + Application Identification type)
0 0 0 1 0 0 0 0 IPv4 remote address type (IPv4 remote address type)
0 0 1 0 0 0 0 1 IPv6 remote address/prefix length type (IPv6 remote address/prefix length type)
0 0 1 1 0 0 0 0 Protocol identifier/next header type (Protocol identifier/next header type)
0 1 0 1 0 0 0 0 Single remote port type (Single remote port type)
0 1 0 1 0 0 0 1 Remote port range type (Remote port range type)
0 1 1 0 0 0 0 0 Security parameter index type (Security parameter index type)
0 1 1 1 0 0 0 0 Service/traffic class type (Service/traffic class type)
1 0 0 0 0 0 0 0 Flow label type (Flow label type)
1 0 0 0 0 0 0 1 Destination MAC address type (Destination MAC address type)
1 0 0 0 0 0 1 1 802.1Q C-TAG VID type (802.1Q Customer Tag Virtual Local Area Network Identifier type)
1 0 0 0 0 1 0 0 802. 1Q S-TAG VID type (802.1Q Service Tag Virtual Local Area Network Identifier type)
1 0 0 0 0 1 0 1 802.1Q C-TAG PCP/DEI type (802.1Q Customer Tag Priority Code Point/Drop Eligible Indicator type)
1 0 0 0 0 1 1 0 802.1Q S-TAG PCP/DEI type (802.1Q Service Tag Priority Code Point/Drop Eligible Indicator type)
1 0 0 0 0 1 1 1 Ethertype type (Ethernet type)
1 0 0 0 1 0 0 0 DNN type (Data Network Name (Data Network Name) type)
1 0 0 1 0 0 0 0 Connection capabilities type (Connection capabilities type)
1 0 0 1 0 0 0 1 Destination FQDN type (Destination Full Quality Domain Name (Full quality domain name) type)

The OS ID+ OS App ID constitutes application descriptors (Application descriptors) information, which is used to identify an application in an operating system. It may also be understood that the application descriptors may be used to indicate which applications in the operating system can transmit data through the slice network. The OS ID is used to identify the operating system, and the App ID is used to identify the application in the operating system. For example, the App ID may be an application package name of an application. To be specific, UE downloads and installs an application from any platform or store. The installation package of the application includes an App ID. After installing the application, the UE may store the installation package name of the application.

It should be noted that the foregoing standard is applicable to interaction between the terminal and the core network. In other words, the terminal may match an App ID of a current application and other parameters with the URSP delivered by the core network, to route data of the application to a specified slice. However, in an application scenario in which the CPE exists, because the existing CPE has only a forwarding function, and cannot accurately identify the application, that is, cannot obtain the App ID, in this scenario, the CPE can route the data of the application to the corresponding slice only by matching an IP 3-tuple (including the IPv4 remote address type, the IPv6 remote address/prefix length type, the Protocol identifier/next header type, the Single remote port type, and the Remote port range type), a DNN (that is, the DNN type), and/or an FQDN (that is, the destination FQDN type) in the URSP.

However, for a specific scenario, for example, in an application scenario in which the URSP includes the App ID and the URSP corresponds to a strong matching requirement, the CPE cannot meet the requirement of the scenario. It should be noted that the strong matching requirement means that all service features specified in the URSP need to be matched. For example, if the service features specified in the URSP include the IP 3-tuple and the App ID, the data may be routed to the specified slice only when both the IP 3-tuple and the App ID are successfully matched. Otherwise, the data may be routed only to a default slice or another communication network, for example, a wide area network (Wide Area Network, WAN). If an operator originally expects to route the data of the application to a high-priority slice, while the CPE fails to match the service feature specified in the URSP, data corresponding to the high-priority slice may be routed only to a low-priority slice or a non-slice network. As a result, data transmission efficiency is reduced, and user experience is affected.

With reference to an application scenario shown in FIG. 2, an interaction procedure between the terminal, the CPE, and the core network in an existing standard is briefly described in the following.
(1) The CPE accesses the core network.

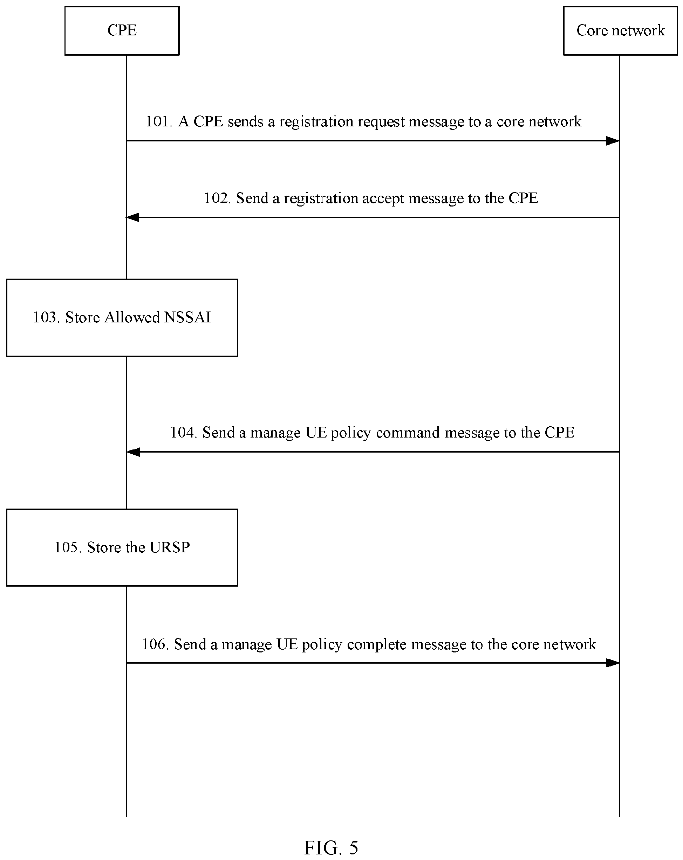

With reference to FIG. 2, FIG. 5 is a schematic flowchart of a CPE accessing a core network according to an embodiment of this application. In FIG. 5:

S101. A CPE sends a registration request message to a core network.

Specifically, the CPE initiates a registration procedure when the CPE is powered on, restarted, updated, or the like. For example, after being powered on, the CPE initiates the registration procedure, or after being refreshed, the CPE also initiates the registration procedure. The registration procedure may be understood as registration and network access of the CPE.

For example, refer to FIG. 5. The CPE sends the registration request (Registration request) message to the core network, to request to initiate a registration procedure. For example, the message may carry information such as a registration type and a security parameter. It should be noted that for the core network, the CPE is equivalent to UE. Therefore, for a specific registration initiation procedure of the CPE, refer to a UE registration procedure in the existing standard. Details are not described in this application.

S102. The core network sends a registration accept (Registration accept) message to the CPE.

Specifically, after allowing the CPE to register and access the network, the core network sends the registration accept message to the CPE. The message carries one or more parameters used to indicate the terminal to access the core network. For example, in this embodiment, the registration accept message carries allowed network slice selection assistance information (Allowed NSSAI), to indicate one or more slices that allow the terminal to be accessed.

S103. The CPE stores allowed NSSAI.

For example, the CPE stores the allowed NSSAI in a storage unit, for example, a memory of the CPE, to be used for subsequent PDU session establishment.

S104. The core network sends a manage UE policy command message (Manage UE policy command) to the CPE.

Specifically, the core network sends the manage UE policy command message to the UE. The message includes but is not limited to the URSP. For example, as described above, the URSP includes the service feature (for example, the IP 3-tuple) and the slice network activation parameter.

S105. The CPE stores the URSP.

Specifically, after obtaining the URSP transmitted from the core network, the CPE decodes the URSP, to obtain and store parameters and information carried in each field in the URSP.

S106. The CPE sends a manage UE policy complete message to the core network.

Specifically, after successfully storing each parameter in the URSP, the CPE sends the manage UE policy complete message to the core network, to indicate that the CPE has successfully processed the URSP.

For example, if the CPE fails to parse the URSP or the CPE fails to store the URSP due to other reasons, the CPE sends a manage UE policy command reject message to the core network.

(2) The UE accesses the CPE

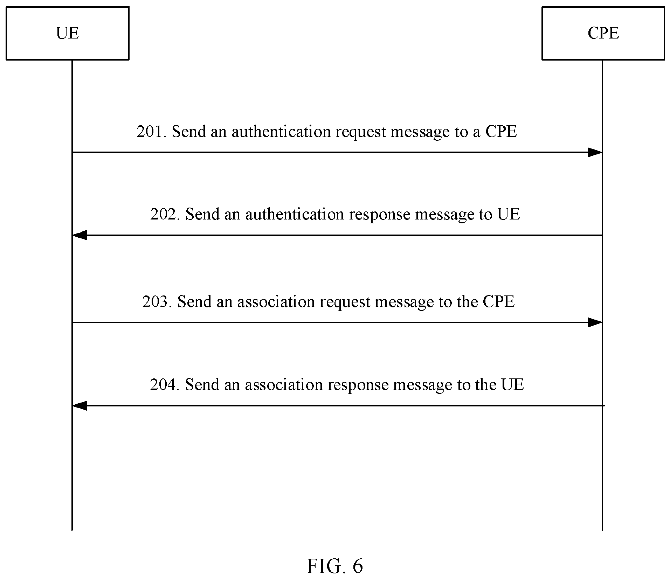

Specifically, in the communication system according to this embodiment of this application, the UE accesses the core network by using the CPE. FIG. 6 is a schematic flowchart of UE accessing a CPE. In FIG. 6:

S201. UE sends an authentication request (Authentication Request) message to a CPE.

S202. The CPE sends an authentication response (Authentication Response) message to the UE.

S203. The UE sends an association request (Association Request) message to the CPE.

S204. The CPE sends an association response (Association Response) message to the UE.

The CPE receives the association response message sent by the UE, and determines that the UE successfully accesses the CPE. Alternatively, it may be understood that the UE successfully accesses the core network by using the CPE.

For specific details and related descriptions of S201 to S204, refer to the standard in the 802.11 protocol. Details are not described in this application again.

(3) The UE and the CPE exchange data with the core network.

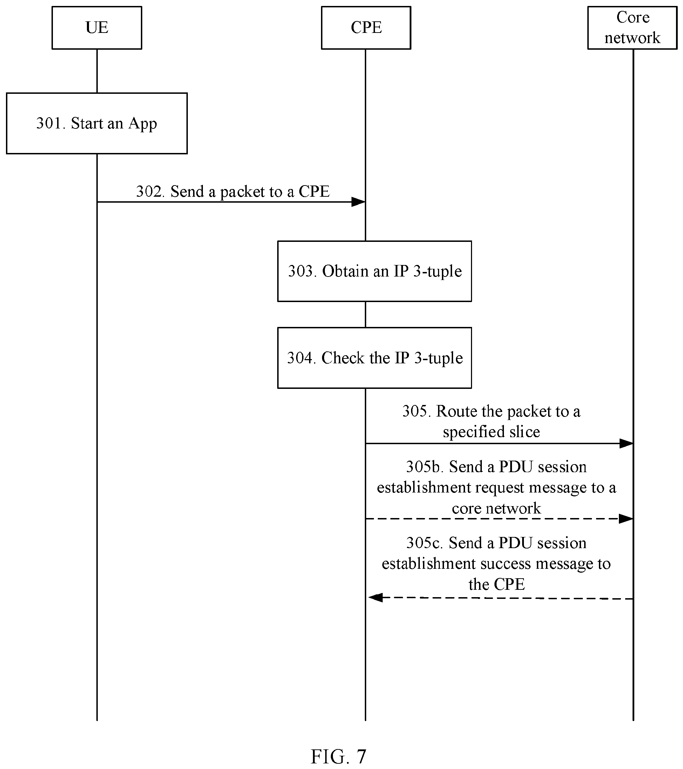

Specifically, after the UE accesses the CPE, a Wi-Fi channel between the UE and the CPE is established. The UE may send the data to the CPE through the Wi-Fi channel between the UE and the CPE, and the CPE forwards the data to the core network through a mobile communication network between the CPE and the core network. In addition, the CPE may further receive the data that is corresponding to the UE and that is sent by the core network through the mobile communication network, and forward the data to the UE through the Wi-Fi channel between the CPE and the UE. In this way, data exchange between the UE and the core network is implemented. FIG. 7 is a schematic flowchart of an interaction between UE, a CPE, and a core network. It should be noted that FIG. 7 shows only an uplink communication process, that is, only a process in which the UE sends data to the core network is used as an example for description. In FIG. 7:

S301. Start an App.

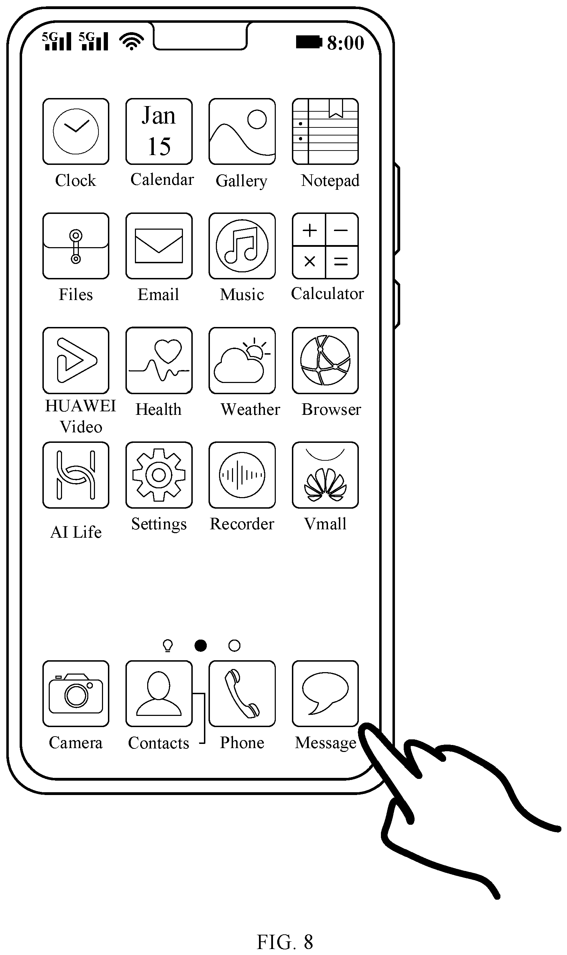

For example, the UE is a mobile phone. The mobile phone downloads and installs an application in response to a user operation. After the application is installed, the mobile phone may start a chat application in response to the user operation, as shown in FIG. 8.

S302. UE sends a packet to a CPE.

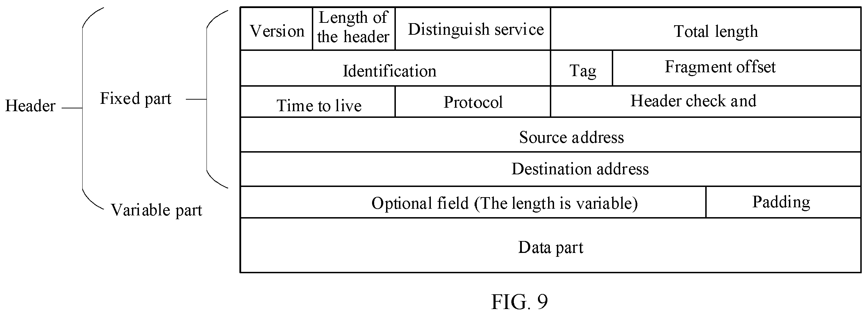

For example, the UE sends signaling or a packet to the CPE through a Wi-Fi channel between the UE and the CPE. A packet format is shown in FIG. 9. Specifically, data is exchanged between the UE and the CPE at three layers (that is, network layers). The packet may also be referred to as an IP packet. The packet carries a data part and an IP header (that is, a header in the FIG. 9). The IP header includes a fixed part (which may also be referred to as a fixed field) and a variable part (which may also be referred to as a variable field). The fixed field includes but is not limited to parameters such as a destination address and a source address, and the variable field includes an optional field and a reserved field (which may also be referred to as a padding field). For example, the field included in the fixed part is fixed. That is, each packet sent by the UE to the CPE needs to carry each field in the fixed part shown in FIG. 9, and information carried in the fields may be the same or may be different. Fields included in the variable part and length of fields are variable. In other words, in different UE or in different application scenarios, field names, locations, and length included in the variable part may be the same or may be different. This is not limited in this application. It should be noted that the names and the locations of the parameters in the packet format shown in FIG. 9 are merely examples for description. This is not limited in this application.

S303. The CPE obtains an IP 3-tuple.

An example in which the URSP delivered by the core network only includes the IP 3-tuple but does not include the App ID is used for description. The CPE responds to the received packet sent by the UE to obtain the IP 3-tuple.

S304. The CPE checks the IP 3-tuple.

For example, the CPE matches the obtained IP 3-tuple with the IP 3-tuple indicated by the URSP and stored in S105. If the IP 3-tuples are successfully matched, that is, all the parameters in the obtained IP 3-tuple exist in the URSP delivered by the core network, the UE determines that the obtained IP 3-tuple is successfully checked, and a packet corresponding to the IP 3-tuple may be routed to a slice network.

For example, if the check on the obtained IP 3-tuple fails, that is, any parameter in the obtained IP 3-tuple does not exist in the URSP, the CPE determines that the check fails, and the packet will be routed to a default slice. Generally, the default slice is a low-priority slice, or the packet will be routed to a non-slice network.

S305. The CPE routes the packet to a specified slice.

For example, after successfully check the IP 3-tuple, the CPE may further obtain, based on other information in the URSP such as the slice network activation parameter described above, other related information of the slice such as NSSAI of the slice.

For example, the CPE may match the NSSAI of the slice with the allowed NSSAI stored in S103, to determine whether the core network allows the data of the UE to be routed to the slice.

The CPE binds the IP 3-tuple to a PDU session corresponding to the slice, so that all subsequently received packets including the IP 3-tuple may be routed to corresponding slices through the bound PDU session. For example, the binding may mean that the CPE correspondingly records, in a memory, information (for example, a service interface or a router entry) related to the IP 3-tuple and the PDU session, so that after detecting the data (that is, the packet including the IP 3-tuple) corresponding to the IP 3-tuple, the CPE determines the PDU session bound to the IP 3-tuple, and routes the data to the slice corresponding to the PDU session.

In an example, if the CPE detects that the PDU session corresponding to the slice is not established, a PDU session establishment procedure needs to be triggered. Refer to FIG. 7. The method further includes the following steps.

S305a. The CPE sends a PDU session establishment request message to a core network.

For example, the CPE initiates the PDU session establishment procedure to the core network, to establish the PDU session corresponding to the slice. For example, the PDU session establishment request message carries the NSSAI of the slice corresponding to the IP 3-tuple.

S305b. The core network sends a PDU session establishment success message to the CPE.

For example, the core network establishes, based on the received PDU session establishment request message, the PDU session of the slice corresponding to the NSSAI, and returns the PDU session establishment success message to the CPE after the PDU session is successfully established.

It should be noted that, for specific details of the PDU session establishment procedure, refer to a PDU session establishment procedure specified in an existing standard. Details are not described in this application.

Specifically, after receiving the PDU session establishment success message, the CPE determines that the PDU session is successfully established, and binds a data flow corresponding to the IP 3-tuple to the PDU session.

In another example, if the CPE detects that the PDU session of the slice corresponding to the IP 3-tuple has been established, the CPE, directly binds the IP 3-tuple to the PDU session, and does not need to perform the PDU session establishment procedure.

A process shown in FIG. 7 is based on a scenario in which the URSP delivered by the core network includes the IP 3-tuple. In other words, when the IP 3-tuple is successfully checked, the CPE is allowed to route the data to the slice network. However, as described above, the service features indicated by the URSP in the existing standard includes but is not limited to one or more of an App ID, an IP 3-tuple, a DNN, and an FQDN. When the URSP need to meet the strong matching requirement, if the service feature specified by the URSP includes the App ID while the CPE cannot obtain the App ID, the CPE cannot complete the check process. For example, for different applications of a same merchant such as a Huawei Video application and a Huawei Backup application, a negotiation result between Huawei and an operator is that data of the Huawei Video application may be routed to a high-priority slice A, and data of the Huawei Backup application may be routed to a low-priority slice B. It is assumed that IP 3-tuples (that is, IPv4 remote address type, IPv6 remote address/prefix length type, the Protocol identifier/next header type, Single remote port type, and Remote port range type) carried in packets of the two applications sent by the UE to the CPE are consistent, if only the IP 3-tuples are matched, the data of the Huawei Video application and the data of the Huawei Backup application data are routed to a same slice. However, to route the data of the Huawei Video application to the high-priority slice A and the data of the Huawei Backup application to the low-priority slice B, the core network needs to further limit different priorities of the slices corresponding to the two applications by using App IDs in the URSP. However, because the CPE cannot obtain the App IDs, in a scenario in which the URSP includes the IP 3-tuples and the App IDs, the CPE can only perform check on the IP 3-tuples but cannot successfully perform check on the App IDs, so that the CPE determines that the check fails. As a result, the data of the Huawei Video application and the data of the Huawei Backup application data can be transmitted only through a low-priority slice network or a non-slice network. To avoid this phenomenon, the core network may not deliver the App ID, that is, the URSP does not include the App ID. However, in this scenario, since the IP 3-tuple of the packet of the Huawei Video application is the same as that of the Huawei Backup application, the data of the Huawei Backup application originally corresponding to the low-priority slice may be routed to the high-priority slice A, causing a waste of resources; or the data of the Huawei Video application originally corresponding to the high-priority slice may be routed to the low-priority slice B, thereby reducing data transmission efficiency.

This application provides a method for transmitting application data. A CPE may perform App ID-based validity check on an App ID carried in a packet sent by UE, thereby increasing diversity of application scenarios of the CPE and optimizing network compatibility.

Several specific embodiments are used to describe the technical solutions in this application in the following.

### Scenario 1

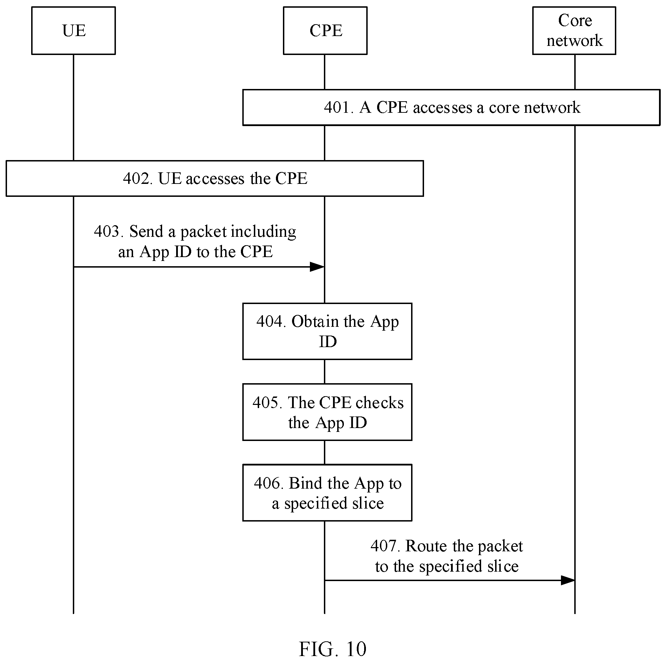

With reference to FIG. 2, FIG. 10 is a schematic flowchart of a method for transmitting application data according to an embodiment of this application. It should be noted that, unless otherwise specified, for steps that are the same as or similar to those in an existing standard in this embodiment, refer to the foregoing procedures. Details are not described again in this embodiment. In FIG. 10:

S401. A CPE accesses a core network.

For example, the CPE initiates a registration process to the core network, and accesses the core network. In the access process, a service feature in the URSP sent by the core network to the CPE includes but is not limited to an App ID. In other words, in this embodiment, the service feature specified by the URSP includes the App ID. For example, the service feature may include an App ID, an IP 3-tuple and an App ID, or an App ID and a DNN. It should be noted that, generally, the URSP includes only one or two types of service features, to reduce signaling overheads and load of UE.

S402. UE accesses the CPE.

For specific steps, refer to S201 to S204. Details are not described herein again.

S403. The UE sends a packet including an App ID to the CPE.

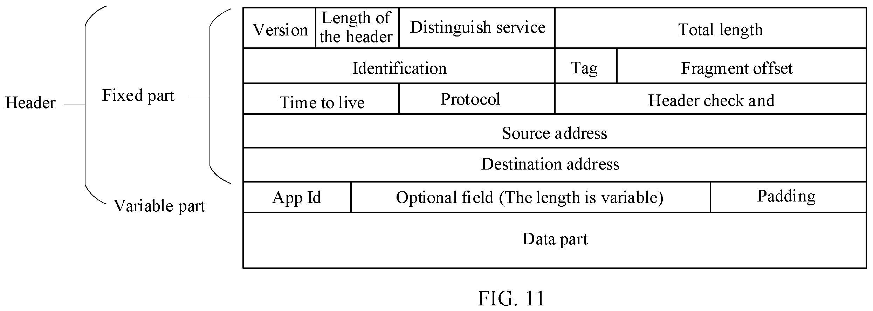

Specifically, after the communication connection is established between the UE, the CPE, and the core network, the UE starts an application in response to a detected user operation. In this application, a chat application is used as an example for description. For example, as described above, in a process of installing the chat application, the UE pre-stores an App ID of the chat application, and the UE obtains the App ID of the chat application and generates the packet. A schematic diagram of a format of a packet is shown in FIG. 11. Refer to FIG. 11. An optional field part in an IP packet header in the packet includes the App ID of the chat application. It should be noted that a location of an App ID field in the optional field shown in FIG. 11 is merely an example. Length and the location of the field may be set based on an actual requirement. This is not limited in this application.

Then, the UE sends the packet including the App ID to the CPE, to request the CPE to forward the packet to the core network side.

S404. The CPE obtains the App ID.

For example, in response to the received packet sent by the UE, the CPE parses the packet to obtain other information (or parameters) such as an App ID, data information, a source address, and a destination address that are carried in the packet.

S405. The CPE checks the App ID.

For example, the CPE has pre-stored the service feature specified by the URSP (for a process, refer to S105), and the CPE may obtain the stored service feature, and perform validity check on the App ID based on the service feature.

For example, in this embodiment, an example in which the service feature specified by the URSP includes the App ID is used for description. In another embodiment, the URSP may further include other service features such as an IP 3-tuple. A manner of checking the other service features is similar to that of checking the App ID, or the manner of checking specified in the existing standard may be referred to. This is not limited in this application.

For example, the CPE determines, based on the service feature specified by the URSP, that validity check of the App ID needs to be performed. The UE needs to determine whether to obtain the App ID. As described above, the UE has obtained the App ID in S404, and may further match the obtained App ID with the App ID indicated by the URSP. If they are successfully matched, data information (that is, data of the chat application) is re-encapsulated (for a data forwarding procedure of the CPE, refer to the conventional technology, and details are not described in this application). If they are failed to be matched, it is determined that validity check on the App ID fails, and the CPE re-encapsulates the data information and routes the data information to a default slice or a non-slice network.

S406. The CPE binds the App to a specified slice.

For example, the chat application is still used as an example. After successfully check the App ID, the CPE may further obtain a slice corresponding to the chat application and other related information of the slice, for example, NSSAI of the slice based on other information in the URSP, for example, the slice network activation parameter described above.

For example, the CPE may match the NSSAI of the slice with pre-stored allowed NSSAI, to determine whether the core network allows the data of the CPE to be routed to the slice. For example, if they are successfully matched, that is, the NSSAI is in the pre-stored Allowed NSSAI, the CPE binds the App ID to a PDU session corresponding to the slice, so that when receiving the packet including the App ID again, the CPE may route the packet including the App ID to the corresponding slice based on the binding relationship between the App ID and the PDU session. For example, if they are failed to be matched, the CPE routes the data of the chat application to the default slice or the non-slice network.

S407. The CPE routes the packet to the specified slice.

For example, after the CPE re-encapsulates the data information, the re-encapsulated packet does not include the App ID, to avoid a compatibility problem when the core network side cannot identify the App ID in the optional field.

For example, the CPE routes the re-encapsulated packet to the specified slice, to transmit the re-encapsulated packet to the core network.

It should be noted that, each packet sent by the UE to the CPE includes the App ID, that is, each time the UE sends the packet, S403 to S407 are repeatedly performed.

In conclusion, in the technical solution in this embodiment of this application, the CPE may obtain the App ID included in the packet sent by the UE, and perform validity check on the App ID, to meet a check rule specified by the URSP, thereby avoiding a phenomenon that the manner specified by the URSP to check the App ID cannot be performed due to the reason that the CPE does not have an application and an App ID corresponding to the application, and effectively improving application data transmission efficiency.

### Scenario 2

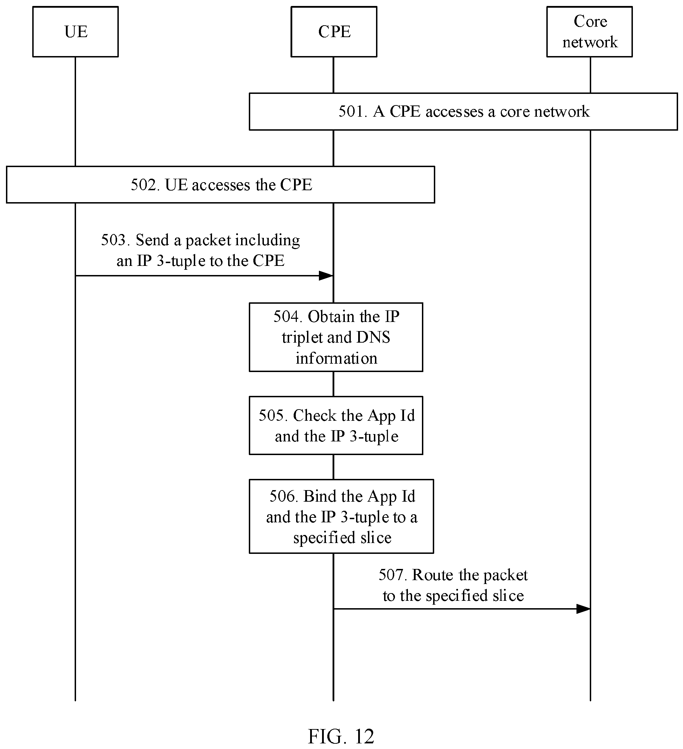

With reference to FIG. 2, FIG. 12 is a schematic flowchart of a method for transmitting application data according to an embodiment of this application. It should be noted that, unless otherwise specified, for steps that are the same as or similar to those in an existing standard in this embodiment, refer to the foregoing procedures. Details are not described again in this embodiment. In FIG. 12:

S501. A CPE accesses a core network.

For example, the CPE initiates a registration process to the core network, and accesses the core network. In the access process, a service feature in the URSP sent by the core network to the CPE includes but is not limited to an App ID and an IP 3-tuple. In other words, in this embodiment, the service feature specified by the URSP includes the App ID and the IP 3-tuple.

S502. UE accesses the CPE.

S503. The UE sends a packet including an IP 3-tuple to the CPE.

Specifically, after the communication connection is established between the UE, the CPE, and the core network, the UE responds to a user operation instruction to start an application. In this embodiment, a chat application is still used as an example for description. The UE sends the packet to the CPE. A packet format may be shown in FIG. 9.

S504. The CPE obtains the IP 3-tuple and DNS information.

For example, the CPE parses the packet to obtain the IP 3-tuple and the DNS information. For example, the DNS information is host name and/or destination address information. For example, the CPE pre-stores a mapping relationship table, where the mapping relationship table includes a correspondence between host name and/or destination address information and the App ID. When validity check needs to be performed on the App ID, that is, in a case in which the service feature specified by the URSP includes the App ID, the CPE may match the obtained host name and/or the destination address information with the host name and/or the destination address information in the mapping table one by one, and extract an App ID of successfully matched host name and/or destination address information.

For example, the mapping table is preconfigured. For example, the mapping table may be delivered by the core network to the CPE in the registration process, or may be manually configured. This is not limited in this application.

S505. The CPE checks the App ID and the IP 3-tuple.

S506. The CPE binds the App ID and the IP 3-tuple to a specified slice.

S507. The CPE routes the packet to the specified slice.

In a possible implementation, after a service of the CPE is updated, a registration procedure is also initiated. For example, a user changes an operator package of the CPE. In an example, the user may change the operator package by using an operator APP, and the CPE notifies the core network that the operator package has been changed. In another example, the user may also call the operator to change the operator package. The operator may directly change the operator package of the user in the core network. Specifically, after the operator package is changed, the core network re-sends a URSP to the CPE, that is, the registration process is repeated and the CPE obtains the updated URSP.

For example, after the URSP is updated, the CPE may perform the procedures and steps in the foregoing scenarios based on the updated URSP. Optionally, before the step of performing validity check on the service feature (for example, at any moment before S405 or S505), the CPE may check the URSP to determine whether the updated URSP is correct. For example, after the URSP is updated, a problem that a service feature is missing or an incorrect service feature is included may occur. Still using a Huawei Video application and a Huawei Backup application as an example, for the two applications, it is expected that the service feature specified by the URSP includes at least the IP 3-tuple and the App ID. However, if the updated URSP does not specify the App ID, data of the Huawei Backup application may be routed to a high-priority slice due to the incorrect URSP, causing a waste of data. In this application, the CPE may check the updated URSP to avoid the foregoing problem. For example, the CPE may obtain the historical URSP, that is, one or more previously stored URSPs, and check the updated URSP based on the historical URSP. For example, if the URSP previously delivered by the core network includes the App ID and the IP 3-tuple, where the App ID is APPID-X, the IP 3-tuple is IP triples-Y, and the APPID-X and the IP triples-Y correspond to a slice A. The updated URSP obtained by the CPE this time includes the App ID, the App ID is APPID-X and corresponds to the slice A, but content of the IP 3-tuple is empty. The CPE may find, from the previous URSP (that is, the historical URSP, which may also be referred to as public information or database information), that the IP 3-tuple corresponding to APPID-X is IP triples-Y. Therefore, the CPE may supplement the service feature corresponding to the slice (that is, the slice A) in the URSP. To be specific, the supplemented service feature includes the App ID and the IP 3-tuple, where the App ID is APPID-X, and the IP 3-tuple is IP triples-Y, to be used as a correct URSP rule.

It should be noted that, in the foregoing embodiments, strong matching is used as an example for description, that is, all service features specified in the URSP must be matched. In a possible implementation, the CPE in this application may further check URSP in a weak matching manner. For example, the service feature specified in the URSP includes the App ID and the IP 3-tuple. The CPE may check only the IP 3-tuple or the App ID obtained from the packet, and route the packet to a corresponding slice after the check succeeds.

It may be understood that, to implement the foregoing functions, the electronic device includes corresponding hardware and/or software modules for performing the functions. Algorithm steps in the examples described with reference to embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In this embodiment, the electronic device may be divided into functional modules based on the foregoing method examples. For example, each functional module corresponding to each function may be obtained through division, or two or more functions may be integrated into one processing module. The integrated module may be implemented in a form of hardware. It should be noted that, in embodiments, division into the modules is an example, and is merely logical function division. During actual implementation, another division manner may be used.

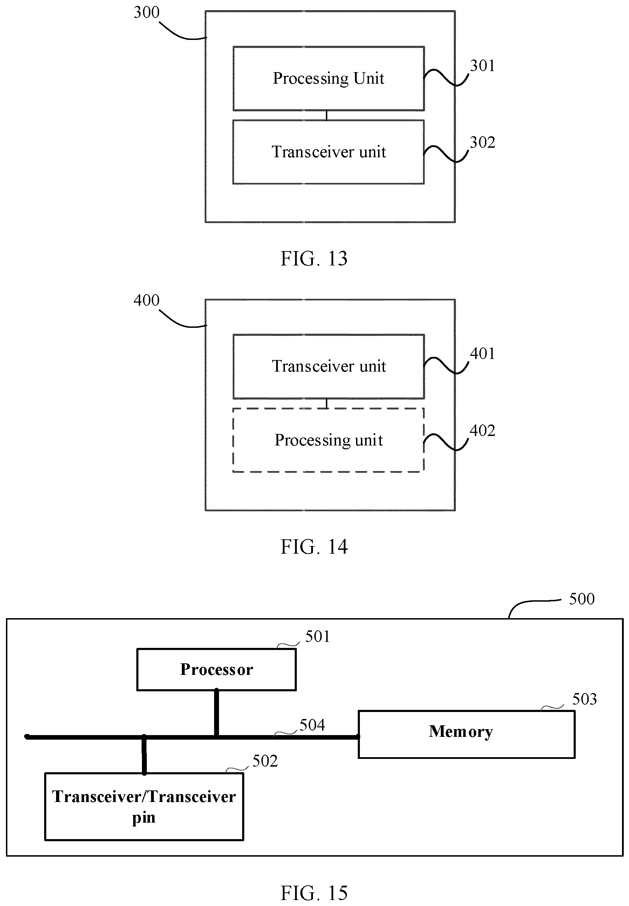

When each functional module is obtained through division based on each corresponding function, FIG. 13 shows a schematic diagram of a structure of a first electronic device 300. The first electronic device 300 includes a processing unit 301 and a transceiver unit 302. The processing unit 301 is configured to run a first application. The transceiver unit 302 is configured to send a first packet to a second electronic device through a Wi-Fi network, where the first packet includes data of the first application and an App ID of the first application, the App ID of the first application is the same as an App ID in URSP information that is received by the second electronic device from a network side, the App ID is used to identify an application, and the second electronic device exchanges data with the network side through a cellular network.

On the basis of the foregoing method embodiment, the processing unit 301 is further configured to run a second application; and the transceiver unit 302 is further configured to send data of the second application and an App ID of the second application to the second electronic device through a Wi-Fi network, where the App ID of the second application is different from the App ID in the URSP information.

On the basis of the foregoing method embodiment, the App ID is an application package name of an application.

In another example, FIG. 14 is a schematic diagram of a structure of a second electronic device 400. The second electronic device 400 includes a transceiver unit 401. The receiving unit 401 is configured to receive first user equipment route selection policy URSP information from a network side, where the first URSP information includes an application identification App ID and first slice parameter information, the App ID is used to identify an application, and the first slice parameter information is used to indicate a first slice network. The second electronic device exchanges data with the network side through a cellular network. The transceiver unit 401 is further configured to receive data of a first application and an App ID of the first application that are sent by a first electronic device through a Wi-Fi network. In addition, the transceiver unit 401 is further configured to transmit the data of the first application to the network side through the first slice network indicated by the first slice parameter information when the App ID of the first application is the same as the App ID in the first URSP information.

Based on the foregoing method embodiment, the first URSP information further includes other service feature information, where the other service feature information includes at least one of the following: IP 3-tuple information, data network name DNN information, and destination fully qualified domain name FQDN information. The transceiver unit 401 is further configured to receive second URSP information from the network side, where the second URSP information includes an App ID, other service feature information, and second slice parameter information, the second slice parameter information is used to indicate a second slice network, and the first slice parameter information is different from the second slice parameter information. The second electronic device 400 further includes a processing unit 402 which is configured to update the second URSP information when the other service feature information in the second URSP information is different from the other service feature information in the first URSP information, where other service feature information in updated second URSP information is the same as the other service feature information in the first URSP information.

On the basis of the foregoing method embodiment, the transceiver unit 401 is further configured to receive data of a second application and an App ID of the second application that are sent by the first electronic device through a Wi-Fi network; and transmit the data of the second application to the network side through a non-slice network or a third slice network when the App ID of the second application is different from the App ID in the URSP information, where the third slice network is different from the first slice network.

On the basis of the foregoing method embodiment, the transceiver unit 401 is further configured to transmit the data of the first application on the first slice network based on a PDU session if the protocol data unit PUD session corresponding to the first slice network has been established between the second electronic device and the network side.

On the basis of the foregoing method embodiment, the processing unit 402 is configured to establish a PDU session corresponding to the first slice network with the network side based on the slice parameter information if a protocol data unit PUD session corresponding to the first slice network has not been established between the second electronic device and the network side. The transceiver unit 401 is configured to transmit the data of the first application on the first slice network based on the PDU session.

Based on the foregoing method embodiment, the transceiver unit 401 is further configured to receive allowed network slice selection assistance information Allowed NSSAI from the network side, where the Allowed NSSAI is used to indicate a slice network set that allows the second electronic device to transmit data, and the first slice network is included in the slice network set.

On the basis of the foregoing method embodiment, the App ID is an application package name of an application.

In still another example, FIG. 14 is a schematic block diagram of an apparatus 500 according to an embodiment of this application. The apparatus 500 may include a processor 501 and a transceiver/transceiver pin 502, and optionally, further include a memory 503.

Components of the apparatus 500 are coupled together by using the bus 504. In addition to a data bus, the bus 504 further includes a power bus, a control bus, and a status signal bus. However, for clear description, various types of buses in the figure are marked as the bus 504.

Optionally, the memory 503 may be configured to execute instructions in the foregoing method embodiments. The processor 501 may be configured to execute the instructions in the memory 503, control a receiving pin to receive a signal, and control a sending pin to send a signal.

The apparatus 500 may be the terminal or the CPE in the foregoing method embodiments.

All related content of the steps in the foregoing method embodiments may be cited in function descriptions of the corresponding functional modules. Details are not described herein again.

This embodiment further provides a computer storage medium. The computer storage medium stores computer instructions. When the computer instructions are run on an electronic device, the electronic device is enabled to perform the related method steps to implement the method for transmitting application data in the foregoing embodiment.

This embodiment further provides a computer program product. When the computer program product is run on a computer, the computer is enabled to perform the foregoing related steps, to implement the method for transmitting application data in the foregoing embodiments.

In addition, an embodiment of this application further provides an apparatus. The apparatus may be specifically a chip, a component, or a module. The apparatus may include a processor and a memory connected to each other. The memory is configured to store computer-executable instructions. When the apparatus runs, the processor can execute the computer-executable instructions stored in the memory, so that the chip performs the method for transmitting application data in the foregoing method embodiments.

The electronic device, the computer storage medium, the computer program product, or the chip provided in the embodiments is configured to perform the corresponding methods provided above. Therefore, for beneficial effects that can be achieved, refer to the beneficial effects of the corresponding method provided above. Details are not described herein again.

Based on the foregoing descriptions of the implementations, a person skilled in the art may understand that for the purpose of convenient and brief description, division into the foregoing functional modules is merely used as an example for illustration. During actual application, the foregoing functions can be allocated to different functional modules for implementation based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

Any content of the embodiments of this application and any content of a same embodiment may be freely combined. Any combination of the foregoing content shall fall within the scope of this application.

When the integrated unit is implemented in the form of the software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip or the like) or a processor (processor) to perform all or some of the steps of the methods described in the embodiments of this application. The foregoing storage medium includes any medium that can store program code, for example, a USB flash drive, a removable hard disk, a read-only memory (read only memory, ROM), a random access memory (random access memory, RAM), a magnetic disk, or an optical disc.

## Claims

1. A second electronic device (400), comprising:
a processor (402, 501) and a memory (503), wherein the memory (503) is coupled to the processor (402, 501);
the memory (503) stores program instructions, and when the program instructions are executed by the processor (402, 501), the second electronic device (400) is enabled to perform the following steps:
receiving first user equipment route selection policy URSP information from a network side, wherein the first URSP information comprises an application identification App ID and first slice parameter information, the App ID is used to identify an application, and the first slice parameter information is used to indicate a first slice network; performing, by the second electronic device (400), data exchange with the network side through a cellular network;
receiving data of a first application and an App ID of the first application that are sent by a first electronic device (300) through a Wi-Fi network;
transmitting the data of the first application to the network side through the first slice network indicated by the first slice parameter information when the App ID of the first application is the same as the App ID in the first URSP information; and
wherein the first URSP information further comprises other service feature information, and the other service feature information comprises at least one of the following:
IP 3-tuple information, data network name DNN information, and destination fully qualified domain name FQDN information;
wherein when the program instructions are executed by the processor (402, 501), the second electronic device (400) is further enabled to perform the following steps:
receiving second URSP information from the network side, wherein the second URSP information comprises at least one of other service feature information, and second slice parameter information, the second slice parameter information is used to indicate a second slice network, and the first slice parameter information is different from the second slice parameter information; and
updating the second URSP information when the other service feature information in the second URSP information is different from the other service feature information in the first URSP information, wherein other service feature information in updated second URSP information is the same as the other service feature information in the first URSP information.

2. The device (400) according to claim 1, wherein when the program instructions are executed by the processor (402, 501), the second electronic device (400) is enabled to perform the following steps:
receiving data of a second application and an App ID of the second application that are sent by the first electronic device (300) through a Wi-Fi network; and
transmitting the data of the second application to the network side through a non-slice network or a third slice network when the App ID of the second application is different from the App ID in the URSP information, wherein the third slice network is different from the first slice network.

3. The device (400) according to claim 1, wherein when the program instructions are executed by the processor (402, 501), the second electronic device (400) is enabled to perform the following step:
transmitting the data of the first application on the first slice network based on a PDU session if the protocol data unit PUD session corresponding to the first slice network has been established between the second electronic device (400) and the network side.

4. The device (400) according to claim 1, wherein when the program instructions are executed by the processor (402, 501), the second electronic device (400) is enabled to perform the following steps:
establishing a PDU session corresponding to the first slice network with the network side based on the slice parameter information if a protocol data unit PUD session corresponding to the first slice network has not been established between the second electronic device (400) and the network side, and transmitting the data of the first application on the first slice network based on the PDU session.

5. The device (400) according to claim 1, wherein when the program instructions are executed by the processor (402, 501), the second electronic device (400) is enabled to perform the following step:
receiving allowed network slice selection assistance information Allowed NSSAI from the network side, wherein the Allowed NSSAI is used to indicate a slice network set that allows the second electronic device (400) to transmit data, and the first slice network is comprised in the slice network set.

6. The device (400) according to claim 1, wherein the App ID is an application package name of an application.

7. A method for transmitting application data, applied to a second electronic device (400), wherein the method comprises:
receiving first user equipment route selection policy URSP information from a network side, wherein the first URSP information comprises an application identification App ID and first slice parameter information, the App ID is used to identify an application, and the first slice parameter information is used to indicate a first slice network; performing, by the second electronic device (400), data exchange with the network side through a cellular network;
receiving data of a first application and an App ID of the first application that are sent by a first electronic device (300) through a Wi-Fi network;
transmitting the data of the first application to the network side through the first slice network indicated by the first slice parameter information when the App ID of the first application is the same as the App ID in the first URSP information; and
wherein the first URSP information further comprises other service feature information, and the other service feature information comprises at least one of the following:
IP 3-tuple information, data network name DNN information, and destination fully qualified domain name FQDN information; and
the method further comprises:
receiving second URSP information from the network side, wherein the second URSP information comprises at least one of other service feature information, and second slice parameter information, the second slice parameter information is used to indicate a second slice network, and the first slice parameter information is different from the second slice parameter information; and
updating the second URSP information when the other service feature information in the second URSP information is different from the other service feature information in the first URSP information, wherein other service feature information in updated second URSP information is the same as the other service feature information in the first URSP information.

8. The method according to claim 7, further comprising:
receiving data of a second application and an App ID of the second application that are sent by the first electronic device (300) through a Wi-Fi network; and
transmitting the data of the second application to the network side through a non-slice network or a third slice network when the App ID of the second application is different from the App ID in the URSP information, wherein the third slice network is different from the first slice network.

9. The method according to claim 7, wherein the transmitting the data of the first application through the first slice network indicated by the first slice parameter information comprises:
transmitting the data of the first application on the first slice network based on a PDU session if the protocol data unit PUD session corresponding to the first slice network has been established between the second electronic device (400) and the network side.

10. The method according to claim 7, wherein the transmitting the data of the first application through the first slice network indicated by the first slice parameter information comprises:
establishing a PDU session corresponding to the first slice network with the network side based on the slice parameter information if a protocol data unit PUD session corresponding to the first slice network has not been established between the second electronic device (400) and the network side, and transmitting the data of the first application on the first slice network based on the PDU session.

11. The method according to claim 7, wherein before the receiving first user equipment route selection policy URSP information from a network side, the method comprises:
receiving allowed network slice selection assistance information Allowed NSSAI from the network side, wherein the Allowed NSSAI is used to indicate a slice network set that allows the second electronic device (400) to transmit data, and the first slice network is comprised in the slice network set.

12. The method according to claim 7, wherein the App ID is an application package name of an application.

13. A system for transmitting application data, comprising a first electronic device (300) and a second electronic device (400), wherein the first electronic device (300) is connected to the second electronic device (400) through a wireless fidelity Wi-Fi network, and the second electronic device (400) exchanges data with a network side through a cellular network;
the second electronic device (400) is configured to receive first user equipment route selection policy URSP information from the network side, wherein the first URSP information comprises an application identification App ID and first slice parameter information, the App ID is used to identify an application, and the first slice parameter information is used to indicate a first slice network;
the first electronic device (300) is configured to send data of a first application and an App ID of the first application to the second electronic device (400) when the first electronic device (300) runs the first application;
the second electronic device (400) is further configured to receive the data of the first application and the App ID of the first application;
the second electronic device (400) is further configured to transmit the data of the first application to the network side through the first slice network indicated by the first slice parameter information when the App ID of the first application is the same as the App ID in the first URSP information; and
wherein the first URSP information further comprises other service feature information, and the other service feature information comprises at least one of the following:
IP 3-tuple information, data network name DNN information, and destination fully qualified domain name FQDN information;
the second electronic device (400) is further configured to receive second URSP information from the network side, wherein the second URSP information comprises at least one of other service feature information, and second slice parameter information, the second slice parameter information is used to indicate a second slice network, and the first slice parameter information is different from the second slice parameter information; and
the second electronic device (400) is further configured to update the second URSP information when the other service feature information in the second URSP information is different from the other service feature information in the first URSP information, wherein other service feature information in updated second URSP information is the same as the other service feature information in the first URSP information.

## Patentansprüche

1. Zweites elektronisches Gerät (400), umfassend:
einen Prozessor (402, 501) und einen Speicher (503), wobei der Speicher (503) mit dem Prozessor (402, 501) gekoppelt ist;
der Speicher (503) speichert Programmanweisungen, und wenn die Programmanweisungen durch den Prozessor (402, 501) ausgeführt werden, wird das zweite elektronische Gerät (400) in die Lage versetzt, die folgenden Schritte auszuführen:
Empfangen erster User Equipment Route Selection Policy URSP-Informationen von einer Netzseite, wobei die ersten URSP-Informationen eine Applikationsidentifikation App-ID und erste Slice-Parameterinformationen umfassen, die App-ID wird zur Identifikation einer Anwendung verwendet und die ersten Slice-Parameterinformationen werden zur Indikation eines ersten Slicenetzwerks verwendet;
Durchführen, durch das zweite elektronische Gerät (400), eines Datenaustauschs mit der Netzseite über ein Mobilfunknetz;
Empfangen von Daten einer ersten Anwendung und einer App-ID der ersten Anwendung, die von einem ersten elektronischen Gerät (300) über ein Wi-Fi-Netzwerk gesendet werden;
Übertragen der Daten der ersten Anwendung an die Netzseite über das erste Slicenetzwerks, das durch die ersten Slice-Parameterinformationen indiziert wird, wenn die App-ID der ersten Anwendung mit der App-ID in den ersten URSP-Informationen übereinstimmt; und
wobei die ersten URSP-Informationen ferner weitere Dienstmerkmalsinformationen umfassen und die weiteren Dienstmerkmalsinformationen mindestens eines der folgenden Elemente umfassen:
IP-3-Tupel-Informationen, Data Network Name DNN-Informationen und Destination Fully Qualified Domain Name FQDN-Informationen;
wobei
wenn die Programmanweisungen durch den Prozessor (402, 501) ausgeführt werden, das zweite elektronische Gerät (400) ferner in die Lage versetzt wird, die folgenden Schritte auszuführen:
Empfangen zweiter URSP-Informationen von der Netzseite, wobei die zweiten URSP-Informationen mindestens eines der folgenden Elemente umfassen: weitere Dienstmerkmalsinformationen und zweite Slice-Parameterinformationen, die zweiten Slice-Parameterinformationen zur Indikation eines zweiten Slicenetzwerks verwendet werden und die ersten Slice-Parameterinformationen von den zweiten Slice-Parameterinformationen verschieden sind; und
Aktualisieren der zweiten URSP-Informationen, wenn die weiteren Dienstmerkmalsinformationen in den zweiten URSP-Informationen von den weiteren Dienstmerkmalsinformationen in den ersten URSP-Informationen verschieden sind, wobei die weiteren Dienstmerkmalsinformationen in den aktualisierten zweiten URSP-Informationen mit den weiteren Dienstmerkmalsinformationen in den ersten URSP-Informationen identisch sind.

2. Gerät (400) nach Anspruch 1, wobei, wenn die Programmanweisungen durch den Prozessor (402, 501) ausgeführt werden, das zweite elektronische Gerät (400) in die Lage versetzt wird, die folgenden Schritte auszuführen:
Empfangen von Daten einer zweiten Anwendung und einer App-ID der zweiten Anwendung, die von dem ersten elektronischen Gerät (300) über ein Wi-Fi-Netzwerk gesendet werden; und
Übertragen der Daten der zweiten Anwendung an die Netzseite über ein Nicht-Slicenetzwerk oder ein drittes Slicenetzwerk, wenn die App-ID der zweiten Anwendung von der App-ID in den URSP-Informationen verschieden ist, wobei das dritte Slicenetzwerk von dem ersten Slicenetzwerk verschieden ist.

3. Gerät (400) nach Anspruch 1, wobei, wenn die Programmanweisungen durch den Prozessor (402, 501) ausgeführt werden, das zweite elektronische Gerät (400) in die Lage versetzt wird, den folgenden Schritt auszuführen:
Übertragen der Daten der ersten Anwendung auf dem ersten Slicenetzwerk auf Basis einer PDU-Sitzung, wenn die Protokolldateneinheits-PUD-Sitzung entsprechend dem ersten Slicenetzwerk zwischen dem zweiten elektronischen Gerät (400) und der Netzseite eingerichtet wurde.

4. Gerät (400) nach Anspruch 1, wobei, wenn die Programmanweisungen durch den Prozessor (402, 501) ausgeführt werden, das zweite elektronische Gerät (400) in die Lage versetzt wird, die folgenden Schritte auszuführen:
Einrichten einer PDU-Sitzung entsprechend dem ersten Slicenetzwerk mit der Netzseite auf Basis der Slice-Parameterinformationen, wenn eine Protokolldateneinheits-PUD-Sitzung entsprechend dem ersten Slicenetzwerk zwischen dem zweiten elektronischen Gerät (400) und der Netzseite nicht eingerichtet wurde, und Übertragen der Daten der ersten Anwendung auf dem ersten Slicenetzwerk auf Basis der PDU-Sitzung.

5. Gerät (400) nach Anspruch 1, wobei, wenn die Programmanweisungen durch den Prozessor (402, 501) ausgeführt werden, das zweite elektronische Gerät (400) in die Lage versetzt wird, den folgenden Schritt auszuführen:
Empfangen von zugelassenen Network Slice Selection Assistance Information Allowed NSSAI-Informationen von der Netzseite, wobei das zugelassene NSSAI zur Indikation einer Slicenetzwerk-Menge verwendet wird, die es dem zweiten elektronischen Gerät (400) ermöglicht, Daten zu übertragen, und das erste Slicenetzwerk in der Slicenetzwerk-Menge enthalten ist.

6. Gerät (400) nach Anspruch 1, wobei die App-ID ein Anwendungspaketname einer Anwendung ist.

7. Verfahren zur Übertragung von Anwendungsdaten, angewendet auf ein zweites elektronisches Gerät (400), wobei das Verfahren umfasst:
Empfangen erster User Equipment Route Selection Policy URSP-Informationen von einer Netzseite, wobei die ersten URSP-Informationen eine Applikaionsidentifikation App-ID und erste Slice-Parameterinformationen umfassen, die App-ID zur Identifikation einer Anwendung verwendet wird und die ersten Slice-Parameterinformationen zur Indikation eines ersten Slicenetzwerks verwendet werden;
Durchführen, durch das zweite elektronische Gerät (400), eines Datenaustauschs mit der Netzseite über ein Mobilfunknetz;
Empfangen von Daten einer ersten Anwendung und einer App-ID der ersten Anwendung, die von einem ersten elektronischen Gerät (300) über ein Wi-Fi-Netzwerk gesendet werden;
Übertragen der Daten der ersten Anwendung an die Netzseite über das erste Slicenetzwerk, das durch die ersten Slice-Parameterinformationen indiziert wird, wenn die App-ID der ersten Anwendung mit der App-ID in den ersten URSP-Informationen übereinstimmt; und
wobei die ersten URSP-Informationen ferner weitere Dienstmerkmalsinformationen umfassen und die weiteren Dienstmerkmalsinformationen mindestens eines der folgenden Elemente umfassen:
IP-3-Tupel-Informationen, Data Network Name DNN-Informationen und Destination Fully Qualified Domain Name FQDN-Informationen; und
das Verfahren ferner umfasst:
Empfangen zweiter URSP-Informationen von der Netzseite, wobei die zweiten URSP-Informationen mindestens eines der folgenden Elemente umfassen: weitere Dienstmerkmalsinformationen und zweite Slice-Parameterinformationen, die zweiten Slice-Parameterinformationen zur Indikation eines zweiten Slicenetzwerks verwendet werden und die ersten Slice-Parameterinformationen von den zweiten Slice-Parameterinformationen verschieden sind; und
Aktualisieren der zweiten URSP-Informationen, wenn die weiteren Dienstmerkmalsinformationen in den zweiten URSP-Informationen von den weiteren Dienstmerkmalsinformationen in den ersten URSP-Informationen verschieden sind, wobei die weiteren Dienstmerkmalsinformationen in den aktualisierten zweiten URSP-Informationen mit den weiteren Dienstmerkmalsinformationen in den ersten URSP-Informationen identisch sind.

8. Verfahren nach Anspruch 7, ferner umfassend:
Empfangen von Daten einer zweiten Anwendung und einer App-ID der zweiten Anwendung, die von dem ersten elektronischen Gerät (300) über ein Wi-Fi-Netzwerk gesendet werden; und
Übertragen der Daten der zweiten Anwendung an die Netzseite über ein Nicht-Slicenetzwerk oder ein drittes Slicenetzwerk, wenn die App-ID der zweiten Anwendung von der App-ID in den URSP-Informationen verschieden ist, wobei das dritte Slicenetzwerk von dem ersten Slicenetzwerk verschieden ist.

9. Verfahren nach Anspruch 7, wobei das Übertragen der Daten der ersten Anwendung über das erste Slicenetzwerk, das durch die ersten Slice-Parameterinformationen indiziert wird, umfasst:
Übertragen der Daten der ersten Anwendung auf dem ersten Slicenetzwerk auf Basis einer PDU-Sitzung, wenn die Protokolldateneinheits-PUD-Sitzung entsprechend dem ersten Slicenetzwerk zwischen dem zweiten elektronischen Gerät (400) und der Netzseite eingerichtet wurde.

10. Verfahren nach Anspruch 7, wobei das Übertragen der Daten der ersten Anwendung über das erste Slicenetzwerk, das durch die ersten Slice-Parameterinformationen indiziert wird, umfasst:
Einrichten einer PDU-Sitzung entsprechend dem ersten Slicenetzwerk mit der Netzseite auf Basis der Slice-Parameterinformationen, wenn eine Protokolldateneinheits-PUD-Sitzung entsprechend dem ersten Slicenetzwerk zwischen dem zweiten elektronischen Gerät (400) und der Netzseite nicht eingerichtet wurde, und Übertragen der Daten der ersten Anwendung auf dem ersten Slicenetzwerk auf Basis der PDU-Sitzung.

11. Verfahren nach Anspruch 7, wobei das Verfahren vor dem Empfangen der ersten URSP-Informationen (User Equipment Route Selection Policy) von einer Netzseite umfasst:
Empfangen von zugelassenen Network Slice Selection Assistance Information NSSAI-Informationen von der Netzseite, wobei das zugelassene NSSAI zur Indikation einer Slicenetzwerk-Menge verwendet wird, die es dem zweiten elektronischen Gerät (400) ermöglicht, Daten zu übertragen, und das erste Slicenetzwerk in der Slicenetzwerk-Menge enthalten ist.

12. Verfahren nach Anspruch 7, wobei die App-ID ein Anwendungspaketname einer Anwendung ist.

13. System zur Übertragung von Anwendungsdaten, umfassend ein erstes elektronisches Gerät (300) und ein zweites elektronisches Gerät (400), wobei das erste elektronische Gerät (300) über ein Wireless Fidelity Wi-Fi-Netzwerk mit dem zweiten elektronischen Gerät (400) verbunden ist und das zweite elektronische Gerät (400) über ein Mobilfunknetz Daten mit einer Netzseite austauscht;
das zweite elektronische Gerät (400) ist konfiguriert, erste User Equipment Route Selection Policy URSP-Informationen von der Netzseite zu empfangen, wobei die ersten URSP-Informationen eine Applikationsidentifikation App-ID und erste Slice-Parameterinformationen umfassen, die App-ID zur Identifikation einer Anwendung verwendet wird und die ersten Slice-Parameterinformationen zur Indikation eines ersten Slicenetzwerks verwendet werden;
das erste elektronische Gerät (300) ist konfiguriert, Daten einer ersten Anwendung und eine App-ID der ersten Anwendung an das zweite elektronische Gerät (400) zu senden, wenn das erste elektronische Gerät (300) die erste Anwendung ausführt;
das zweite elektronische Gerät (400) ist ferner konfiguriert, die Daten der ersten Anwendung und die App-ID der ersten Anwendung zu empfangen;
das zweite elektronische Gerät (400) ist ferner konfiguriert, die Daten der ersten Anwendung an die Netzseite über das erste Slicenetzwerk zu übertragen, das durch die ersten Slice-Parameterinformationen indiziert wird, wenn die App-ID der ersten Anwendung mit der App-ID in den ersten URSP-Informationen übereinstimmt; und
wobei die ersten URSP-Informationen ferner weitere Dienstmerkmalsinformationen umfassen und die weiteren Dienstmerkmalsinformationen mindestens eines der folgenden Elemente umfassen:
IP-3-Tupel-Informationen, Date Network Name DNN-Informationen und Destination Fully Qualified Name FQDN-Informationen;
das zweite elektronische Gerät (400) ist ferner konfiguriert, zweite URSP-Informationen von der Netzseite zu empfangen, wobei die zweiten URSP-Informationen mindestens eines der folgenden Elemente umfassen: weitere Dienstmerkmalsinformationen und zweite Slice-Parameterinformationen, die zweiten Slice-Parameterinformationen zur Indikation eines zweiten Slicenetzwerks verwendet werden und die ersten Slice-Parameterinformationen von den zweiten Slice-Parameterinformationen verschieden sind; und
das zweite elektronische Gerät (400) ist ferner konfiguriert, die zweiten URSP-Informationen zu aktualisieren, wenn die weiteren Dienstmerkmalsinformationen in den zweiten URSP-Informationen von den weiteren Dienstmerkmalsinformationen in den ersten URSP-Informationen verschieden sind, wobei die weiteren Dienstmerkmalsinformationen in den aktualisierten zweiten URSP-Informationen mit den weiteren Dienstmerkmalsinformationen in den ersten URSP-Informationen identisch sind.

## Revendications

1. Un second dispositif électronique (400), comprenant :
un processeur (402, 501) et une mémoire (503), dans lequel la mémoire (503) est couplée au processeur (402, 501) ;
la mémoire (503) stocke des instructions de programme, et lorsque les instructions de programme sont exécutées par le processeur (402, 501), le second dispositif électronique (400) est mis en mesure d'effectuer les étapes suivantes :
réception, depuis un côté réseau, de premières informations de politique de sélection de route d'équipement utilisateur URSP, dans lequel les premières informations URSP comprennent un identifiant d'application App ID et des premières informations de paramètre de tranche, l'App ID est utilisé pour identifier une application, et les premières informations de paramètre de tranche sont utilisées pour indiquer un premier réseau de tranches ;
réalisation, par le second dispositif électronique (400), d'un échange de données avec le côté réseau au travers d'un réseau cellulaire ;
réception de données d'une première application et d'un App ID de la première application qui sont envoyés par un premier dispositif électronique (300) au travers d'un réseau Wi-Fi ;
transmission des données de la première application au côté réseau au travers du premier réseau de tranches indiqué par les premières informations de paramètre de tranche lorsque l'App ID de la première application est identique à l'App ID dans les premières informations URSP ; et
dans lequel les premières informations URSP comprennent en outre d'autres informations de caractéristique de service, et lesdites autres informations de caractéristique de service comprennent au moins l'un des éléments suivants :
des informations de triplet IP, des informations de nom de réseau de données DNN, et des informations de nom de domaine pleinement qualifié de destination FQDN ;
dans lequel
lorsque les instructions de programme sont exécutées par le processeur (402, 501), le second dispositif électronique (400) est en outre mis en mesure d'effectuer les étapes suivantes :
réception, depuis le côté réseau, de secondes informations URSP, dans lequel les secondes informations URSP comprennent au moins l'un des éléments suivants : d'autres informations de caractéristique de service, et des secondes informations de paramètre de tranche, les secondes informations de paramètre de tranche sont utilisées pour indiquer un second réseau de tranches, et les premières informations de paramètre de tranche sont différentes des secondes informations de paramètre de tranche ; et
mise à jour des secondes informations URSP lorsque lesdites autres informations de caractéristique de service dans les secondes informations URSP sont différentes desdites autres informations de caractéristique de service dans les premières informations URSP, dans lequel lesdites autres informations de caractéristique de service dans les secondes informations URSP mises à jour sont identiques auxdites autres informations de caractéristique de service dans les premières informations URSP.

2. Le dispositif (400) selon la revendication 1, dans lequel lorsque les instructions de programme sont exécutées par le processeur (402, 501), le second dispositif électronique (400) est mis en mesure d'effectuer les étapes suivantes :
réception de données d'une seconde application et d'un App ID de la seconde application qui sont envoyés par le premier dispositif électronique (300) au travers d'un réseau Wi-Fi ; et
transmission des données de la seconde application au côté réseau au travers d'un réseau sans tranche ou d'un troisième réseau de tranches lorsque l'App ID de la seconde application est différent de l'App ID dans les informations URSP, dans lequel le troisième réseau de tranches est différent du premier réseau de tranches.

3. Le dispositif (400) selon la revendication 1, dans lequel lorsque les instructions de programme sont exécutées par le processeur (402, 501), le second dispositif électronique (400) est mis en mesure d'effectuer l'étape suivante :
transmission des données de la première application sur le premier réseau de tranches sur la base d'une session PDU si la session d'unité de données de protocole PUD correspondant au premier réseau de tranches a été établie entre le second dispositif électronique (400) et le côté réseau.

4. Le dispositif (400) selon la revendication 1, dans lequel lorsque les instructions de programme sont exécutées par le processeur (402, 501), le second dispositif électronique (400) est mis en mesure d'effectuer les étapes suivantes :
établissement d'une session PDU correspondant au premier réseau de tranches avec le côté réseau sur la base des informations de paramètre de tranche si une session d'unité de données de protocole PUD correspondant au premier réseau de tranches n'a pas été établie entre le second dispositif électronique (400) et le côté réseau, et transmission des données de la première application sur le premier réseau de tranches sur la base de la session PDU.

5. Le dispositif (400) selon la revendication 1, dans lequel lorsque les instructions de programme sont exécutées par le processeur (402, 501), le second dispositif électronique (400) est mis en mesure d'effectuer l'étape suivante :
réception, depuis le côté réseau, d'informations d'assistance à la sélection de tranches de réseau autorisées NSSAI autorisé, dans lequel le NSSAI autorisé est utilisé pour indiquer un ensemble de réseaux de tranches permettant au second dispositif électronique (400) de transmettre des données, et le premier réseau de tranches est compris dans l'ensemble de réseaux de tranches.

6. Le dispositif (400) selon la revendication 1, dans lequel l'App ID est un nom de package d'application d'une application.

7. Un procédé de transmission de données d'application, appliqué à un second dispositif électronique (400), dans lequel le procédé comprend :
la réception, depuis un côté réseau, de premières informations de politique de sélection de route d'équipement utilisateur URSP, dans lequel les premières informations URSP comprennent un identifiant d'application App ID et des premières informations de paramètre de tranche, l'App ID est utilisé pour identifier une application, et les premières informations de paramètre de tranche sont utilisées pour indiquer un premier réseau de tranches ;
la réalisation, par le second dispositif électronique (400), d'un échange de données avec le côté réseau au travers d'un réseau cellulaire ;
la réception de données d'une première application et d'un App ID de la première application qui sont envoyés par un premier dispositif électronique (300) au travers d'un réseau Wi-Fi ;
la transmission des données de la première application au côté réseau au travers du premier réseau de tranches indiqué par les premières informations de paramètre de tranche lorsque l'App ID de la première application est identique à l'App ID dans les premières informations URSP ; et
dans lequel les premières informations URSP comprennent en outre d'autres informations de caractéristique de service, et lesdites autres informations de caractéristique de service comprennent au moins l'un des éléments suivants :
des informations de triplet IP, des informations de nom de réseau de données DNN, et des informations de nom de domaine pleinement qualifié de destination FQDN ; et
le procédé comprend en outre :
la réception, depuis le côté réseau, de secondes informations URSP, dans lequel les secondes informations URSP comprennent au moins l'un des éléments suivants : d'autres informations de caractéristique de service, et des secondes informations de paramètre de tranche, les secondes informations de paramètre de tranche sont utilisées pour indiquer un second réseau de tranches, et les premières informations de paramètre de tranche sont différentes des secondes informations de paramètre de tranche ; et
la mise à jour des secondes informations URSP lorsque lesdites autres informations de caractéristique de service dans les secondes informations URSP sont différentes desdites autres informations de caractéristique de service dans les premières informations URSP, dans lequel lesdites autres informations de caractéristique de service dans les secondes informations URSP mises à jour sont identiques auxdites autres informations de caractéristique de service dans les premières informations URSP.

8. Le procédé selon la revendication 7, comprenant en outre :
la réception de données d'une seconde application et d'un App ID de la seconde application qui sont envoyés par le premier dispositif électronique (300) au travers d'un réseau Wi-Fi ; et
la transmission des données de la seconde application au côté réseau au travers d'un réseau sans tranche ou d'un troisième réseau de tranches lorsque l'App ID de la seconde application est différent de l'App ID dans les informations URSP, dans lequel le troisième réseau de tranches est différent du premier réseau de tranches.

9. Le procédé selon la revendication 7, dans lequel la transmission des données de la première application au travers du premier réseau de tranches indiqué par les premières informations de paramètre de tranche comprend :
la transmission des données de la première application sur le premier réseau de tranches sur la base d'une session PDU si la session d'unité de données de protocole PUD correspondant au premier réseau de tranches a été établie entre le second dispositif électronique (400) et le côté réseau.

10. Le procédé selon la revendication 7, dans lequel la transmission des données de la première application au travers du premier réseau de tranches indiqué par les premières informations de paramètre de tranche comprend :
l'établissement d'une session PDU correspondant au premier réseau de tranches avec le côté réseau sur la base des informations de paramètre de tranche si une session d'unité de données de protocole PUD correspondant au premier réseau de tranches n'a pas été établie entre le second dispositif électronique (400) et le côté réseau, et la transmission des données de la première application sur le premier réseau de tranches sur la base de la session PDU.

11. Le procédé selon la revendication 7, dans lequel, avant la réception des premières informations de politique de sélection de route d'équipement utilisateur URSP depuis un côté réseau, le procédé comprend :
la réception, depuis le côté réseau, d'informations d'assistance à la sélection de tranches de réseau autorisées NSSAI autorisé, dans lequel le NSSAI autorisé est utilisé pour indiquer un ensemble de réseaux de tranches permettant au second dispositif électronique (400) de transmettre des données, et le premier réseau de tranches est compris dans l'ensemble de réseaux de tranches.

12. Le procédé selon la revendication 7, dans lequel l'App ID est un nom de package d'application d'une application.

13. Un système de transmission de données d'application, comprenant un premier dispositif électronique (300) et un second dispositif électronique (400), dans lequel le premier dispositif électronique (300) est connecté au second dispositif électronique (400) au travers d'un réseau de fidélité sans fil Wi-Fi, et le second dispositif électronique (400) échange des données avec un côté réseau au travers d'un réseau cellulaire ;
le second dispositif électronique (400) est configuré pour recevoir, depuis le côté réseau, de premières informations de politique de sélection de route d'équipement utilisateur URSP, dans lequel les premières informations URSP comprennent un identifiant d'application App ID et des premières informations de paramètre de tranche, l'App ID est utilisé pour identifier une application, et les premières informations de paramètre de tranche sont utilisées pour indiquer un premier réseau de tranches ;
le premier dispositif électronique (300) est configuré pour envoyer des données d'une première application et un App ID de la première application au second dispositif électronique (400) lorsque le premier dispositif électronique (300) exécute la première application ;
le second dispositif électronique (400) est en outre configuré pour recevoir les données de la première application et l'App ID de la première application ;
le second dispositif électronique (400) est en outre configuré pour transmettre les données de la première application au côté réseau au travers du premier réseau de tranches indiqué par les premières informations de paramètre de tranche lorsque l'App ID de la première application est identique à l'App ID dans les premières informations URSP ; et
dans lequel les premières informations URSP comprennent en outre d'autres informations de caractéristique de service, et lesdites autres informations de caractéristique de service comprennent au moins l'un des éléments suivants :
des informations de triplet IP, des informations de nom de réseau de données DNN, et des informations de nom de domaine pleinement qualifié de destination FQDN ;
le second dispositif électronique (400) est en outre configuré pour recevoir, depuis le côté réseau, de secondes informations URSP, dans lequel les secondes informations URSP comprennent au moins l'un des éléments suivants : d'autres informations de caractéristique de service, et des secondes informations de paramètre de tranche, les secondes informations de paramètre de tranche sont utilisées pour indiquer un second réseau de tranches, et les premières informations de paramètre de tranche sont différentes des secondes informations de paramètre de tranche ; et
le second dispositif électronique (400) est en outre configuré pour mettre à jour les secondes informations URSP lorsque lesdites autres informations de caractéristique de service dans les secondes informations URSP sont différentes desdites autres informations de caractéristique de service dans les premières informations URSP, dans lequel lesdites autres informations de caractéristique de service dans les secondes informations URSP mises à jour sont identiques auxdites autres informations de caractéristique de service dans les premières informations URSP.
